# EUROPEAN PATENT APPLICATION

(11) **EP 4 834 738 A1**
(43) Date of publication of application: **04.11.2026**
(21) Application number: 24829582.6
(22) Date of filing: 29.11.2024
(51) Int. Cl.: B62H 5/00, B62J 9/00, B62J 9/30, B60R 25/00, G07C 9/00

(54) **ACTUATOR ACTIVATION SYSTEM FOR VEHICLE ACCESSORY AND METHOD FOR SAME**

(30) Priority: 28.12.2023 JP 2023222078
(71) Applicant: Robert Bosch GmbH, 70442 Stuttgart (DE)
(72) Inventor: DUMITRU, Traian, Yokohama-shi, Kanagawa 224-8501 (JP); BURTON, Edward, Clayton, Victoria 3168 (AU)
(74) Representative: Isarpatent
(86) International application number: PCT/IB2024/062030
(87) International publication number: WO 2025/141358

(57) **Abstract**

The present invention relates to an actuator activation system for an on-vehicle accessory, and a method thereof.

A system according to the invention is provided with: an authentication unit (32) that performs user authentication of a user of a mobile terminal (20); a command processing unit (33) that processes a command for activating an actuator that attaches and detaches an accessory (200) to be mounted to a vehicle (10) to and from the vehicle, in response to an input by the user; a transmission IC (34) that performs wireless communication with a reception IC (41) to be mounted to the accessory, based on the command; a power transmitting unit (35) that performs power transmission to a power receiving unit (42) to be mounted to the accessory, when the wireless communication is established; and an executing unit (44) that executes activation of the actuator by using the power that is received by the power receiving unit (42).

## Description

### Technical Field

The present invention relates to a system that activates an actuator for attaching and detaching an on-vehicle accessory to and from a vehicle by using a wireless communication device.

### Background Art

A smart entry system that uses Ultra-Wide Band (UWB), which is one of the standards of wireless communication, is a technique to be applied to vehicles.

With signals of an impulse system based on UWB, which use radio waves having an extremely short pulse width not more than a nanosecond, propagation time of the radio waves can be measured with high accuracy and ranging based on the propagation time can be performed with high accuracy. For example, when a user who owns a mobile terminal to which a function of transmitting and receiving signals that use UWB is mounted approaches within a predetermined distance from the vehicle, a control device provided to the vehicle calculates a distance between the mobile terminal and a wireless communication unit that is mounted to the vehicle, and when the distance becomes equal to or lower than a predetermined value, a keyless entry system unlocks a door of the vehicle and starts a drive device of the vehicle, for example (For example, see PTL 1).

Employing the standard of UWB enables the control of the vehicle with power saving while maintaining the high ranging accuracy.

### Citation List

### Patent Literature

PTL 1: JP2021-148741A

### Summary of Invention

### Technical Problem

In a saddle-type vehicle such as a two-wheeled motor vehicle, accessories such as a pannier case and a top case may be attached to a vehicle as attachments of a vehicle main body. Moreover, in a saddle-type vehicle for delivery service, a storage box with a lid that can be opened and closed is attached to the vehicle. Attachment and detachment of these accessories to and from the vehicle and opening and closing of the lid normally require a dedicated key, and do not operate together with the abovementioned smart entry system. Accordingly, the user needs to own a dedicated key for attaching and detaching the accessory to and from the vehicle and for opening and closing the lid, and is not released from the burden of owning the dedicated key.

The present invention is made in view of the abovementioned problems, and provides an actuator activation system for an on-vehicle accessory capable of attaching and detaching an on-vehicle accessory to and from a vehicle, and opening and closing of a lid without a dedicated key to be owned by the user, and a method thereof.

### Solution to Problem

An actuator activation system for an on-vehicle accessory according to the present invention is provided with: an authentication unit that performs user authentication of a user of a mobile terminal; a command processing unit that processes a command for activating an actuator that attaches and detaches an accessory to be mounted to a vehicle to and from the vehicle, in response to an input by the user; a transmission IC that performs wireless communication with a reception IC to be mounted to the accessory, based on the command; a power transmitting unit that performs power transmission to a power receiving unit to be mounted to the accessory, when the wireless communication is established; and an executing unit that executes activation of the actuator by using the power that is received by the power receiving unit.

An actuator activation system for an on-vehicle accessory according to another aspect of the invention is provided with: an authentication unit that performs user authentication of a user of a mobile terminal; a command processing unit that processes a command for activating an actuator that opens and closes a lid of a storage box serving as an accessory to be mounted to a vehicle, in response to an input by the user; a transmission IC that performs wireless communication with a reception IC to be mounted to the storage box, based on the command; a power transmitting unit that performs power transmission to a power receiving unit to be mounted to the storage box, when the wireless communication is established; and an executing unit that executes activation of the actuator by using the power that is received by the power receiving unit.

An actuator activation method for an on-vehicle accessory according to the invention includes: an authentication step of performing user authentication of a user of a mobile terminal; a process step of processing a command for activating an actuator that attaches and detaches an accessory to be mounted to a vehicle to and from the vehicle, in response to an input by the user; a communication step of performing wireless communication with a reception IC to be mounted to the accessory, based on the command; a power transmission step of performing power transmission to a power receiving unit to be mounted to the accessory, when the wireless communication is established; and an execution step of executing activation of the actuator by using the power that is received by the power receiving unit.

An actuator activation method for an on-vehicle accessory according to another aspect of the invention includes: an authentication step of performing user authentication of a user of a mobile terminal; a process step of processing a command for activating an actuator that opens and closes a lid of a storage box serving as an accessory to be mounted to a vehicle, in response to an input by the user; a communication step of performing wireless communication with a reception IC to be mounted to the storage box, based on the command; a power transmission step of performing power transmission to a power receiving unit to be mounted to the storage box, when the wireless communication is established; and an execution step of executing activation of the actuator by using the power that is received by the power receiving unit.

### Advantageous Effects of Invention

With the actuator activation system for an on-vehicle accessory and the method thereof according to the present invention, it is possible to attach and detach an on-vehicle accessory to and from a vehicle, and open and close a lid of an on-vehicle storage box without a dedicated key to be owned by the user.

### Brief Description of Drawings

Fig. 1 is a diagram illustrating one example of a mounted state of an actuator activation system for an on-vehicle accessory according to the present invention to a two-wheeled motor vehicle.
Fig. 2 is a diagram illustrating a system configuration diagram of the actuator activation system for an on-vehicle accessory according to the invention.
Fig. 3 is a diagram illustrating an operation flow of an actuator activation system for an on-vehicle accessory according to a first embodiment of the present invention.
Fig. 4 is a diagram illustrating an operation flow of an actuator activation system for an on-vehicle accessory according to a second embodiment of the present invention. Description of Embodiments

Hereinafter, embodiments of an actuator activation system 1 for an on-vehicle accessory according to the present invention will be described based on the drawings. Further, the invention is not limited to the embodiments below, but various modifications can be made without deviating from the scope of the invention.

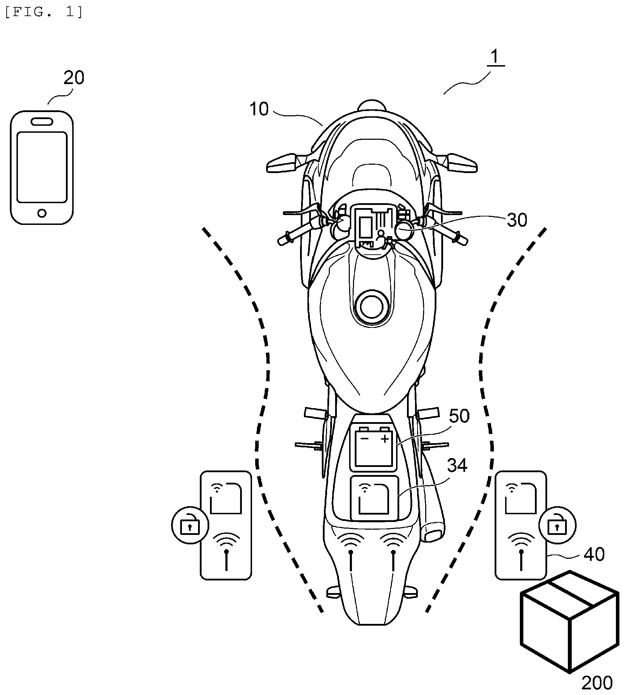

Fig. 1 illustrates an actuator activation system 1, which is one example of the invention, for an accessory mounted to a vehicle. In the actuator activation system 1 for an on-vehicle accessory, communication between a vehicle 10 and a mobile terminal 20 that is owned by an occupant (one example of a user) of the vehicle is used to attach and detach an on-vehicle accessory 200 to and from the vehicle or open and close a lid of a storage box, which is one of the on-vehicle accessory 200.

The actuator activation system 1 for the on-vehicle accessory 200 is provided with a communication control unit 30 that controls non-contact communication or the like with the mobile terminal 20, and transmits power to an actuator control unit 40, and the actuator control unit 40 that controls activation of an actuator that attaches and detaches the accessory to and from the vehicle or opens and closes a lid of the accessory, based on the power that is transmitted from the communication control unit 30.

In the present embodiment, the communication control unit 30 is incorporated into a cluster panel that is used for various communication in the vehicle. The communication control unit 30 is connected to a battery 50, and is supplied with power for communication control that is performed by the communication control unit 30, from the battery 50. The actuator control unit 40 is attached to the accessory 200, and is not directly connected to the battery 50. Accordingly, power that is transmitted by the communication control unit 30 is used to activate an actuator for attaching and detaching an accessory to and from the vehicle and opening and closing a lid of a storage box. Note that, a transmission IC 34, which is the configuration of the communication control unit 30, may be provided in a rear portion from the center of the vehicle as illustrated in Fig. 1. In this manner, the transmission IC 34 is provided to a position close to positions at which accessories such as a pannier case, a top case, and a storage box are provided, and thus can perform good communication with a reception IC 41 that is attached to the accessory.

The battery 50 is a power supply that is mounted to the vehicle 10, is connected to at least the communication control unit 30, and performs power supply to the communication control unit 30.

The accessory 200, which is used by an occupant of a vehicle in the invention, indicates attachments other than the vehicle main body. Specifically, the accessory 200 indicates a pannier case, a top case, and the like that are attached to the vehicle in an attachable and detachable manner, or a storage box that is mounted to a vehicle to be used in delivery service, stores mail, food, and the like, and includes a lid that can be opened and closed.

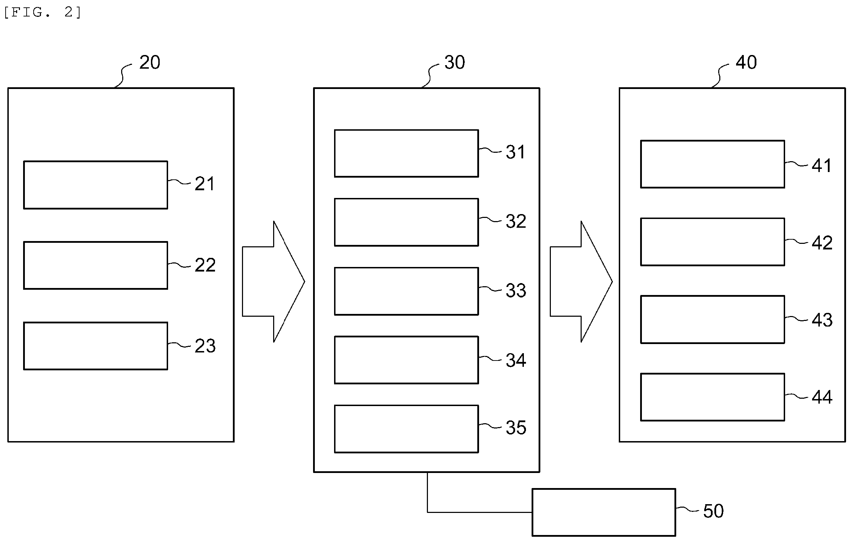

Fig. 2 illustrates a system configuration diagram of the actuator activation system 1 for an on-vehicle accessory, which is one example of the invention.

The mobile terminal 20 is a mobile terminal that is owned by a user, and is a mobile telephone such as a smartphone, for example. The mobile terminal 20 at least includes a non-contact communication unit 21, an interface 22, and a message generating unit 23, in order to operate with the actuator activation system 1 for an on-vehicle accessory.

The non-contact communication unit 21 is configured so as to allow non-contact communication with the communication control unit 30, using Near Field Communication (NFC), for example. When a user attaches and detaches the accessory to and from the vehicle or opens and closes the lid of the storage box, the user approaches within a predetermined distance from the vehicle 10 to establish communication between the mobile terminal 20 and a receiver 31. The communication by the non-contact communication unit 21 may use other UWB (ultrawideband) or Bluetooth (registered trademark).

The interface 22 is an interface into which the user inputs a demand for attaching and detaching the accessory to and from the vehicle or opening and closing the lid of the storage box. The interface 22 may be started up as one of the functions of the smart entry system, or may receive inputs through the activation of a separate application.

The message generating unit 23 generates a message to the actuator control unit 40 that implements attaching and detaching of the accessory to and from the vehicle or opening and closing of the lid of the storage box, in response to an input that is performed by the user via the interface 22.

The communication control unit 30 is incorporated into, for example, a cluster panel that is mounted to the vehicle 10, and is provided with at least the receiver 31, an authentication unit 32, a processing unit 33, the transmission IC 34, and a power transmitting unit 35.

The receiver 31 receives radio waves from the non-contact communication unit 21 of the mobile terminal 20, and enables non-contact communication between the mobile terminal 20 and the communication control unit 30.

The authentication unit 32 includes a communication program and an authentication program, and can perform authentication processing of determining whether the mobile terminal 20 is a normal terminal corresponding to the vehicle. An authentication result by the authentication unit 32 is transmitted to the processing unit 33, and based on the authentication result, a command for causing the actuator control unit 40 to implement attaching and detaching of the accessory to and from the vehicle or opening and closing of the lid of the storage box is transmitted to the actuator control unit 40 via the transmission IC 34. The actuator control unit 40 controls an actuator based on the transmitted message to cause the actuator to perform attaching and detaching processing of the accessory to and from the vehicle or opening and closing processing of the lid of the storage box. In this manner, the communication control unit 30 controls the operation of the actuator based on the communication with the mobile terminal 20.

Note that, the communication with the actuator control unit 40 via the transmission IC 34 may be Near Field Communication (NFC), which is used when the receiver 31 communicates with the mobile terminal 20.

The power transmitting unit 35 is configured so as to allow non-contact power feeding to a power receiving unit 42, which is incorporated into the actuator control unit 40 and is described later. The non-contact power feeding from the power transmitting unit 35 to the power receiving unit 42 is performed using the electromagnetic induction, for example. Specifically, a power transmitting-side coil is provided to the power transmitting unit 35, a power receiving-side coil is provided to the power receiving unit 42, and a magnetic flux generated in the power transmitting-side coil is interlinked with the power receiving-side coil to generate an induced electromotive force, thereby allowing the non-contact power feeding from the power transmitting unit 35 to the power receiving unit 42. The power transmitting-side coil of the power transmitting unit 35 can be configured so as to be applied with alternating-current power by a power supply circuit provided in the power transmitting unit 35.

The actuator control unit 40 controls the activation of the actuator using a control program or the like. Whether the accessory is attached to the vehicle (an attached state or a detached state) or whether the lid of the storage box is opened (an opening and closing state of the lid) is detected by a detection unit, which is not illustrated, for example, and a signal of the detection is transmitted to the actuator control unit 40.

The actuator control unit 40 is mounted to the accessory, and includes at least the reception IC 41, the power receiving unit 42, a power supply managing unit 43, and an executing unit 44.

The reception IC 41 receives radio waves from the transmission IC 34 to establish non-contact communication between the communication control unit 30 and the actuator control unit 40. Simultaneously with this, the reception IC 41 receives a message that is generated by the message generating unit 23.

The power receiving unit 42 receives the power transmitted from the power transmitting unit 35 of the communication control unit 30. The power supply managing unit 43 converts the alternating-current power received by the power receiving unit 42 into direct-current power, and converts the voltage of the converted direct-current power into a desired voltage.

The executing unit 44 controls the power for activating the actuator based on the message received by the reception IC 41. The actuator (not illustrated) uses a linear motor, a rotation motor, or the like as a drive source, and drives a movable part for attaching the accessory to the vehicle or an opening and closing mechanism that opens and closes the lid of the storage box. Moreover, the actuator is desirably electrically connected to and integrally formed with the actuator control unit 40. This can activate the actuator based on the power received by the power receiving unit 42, even in an environment in which the actuator cannot be directly connected to the power supply.

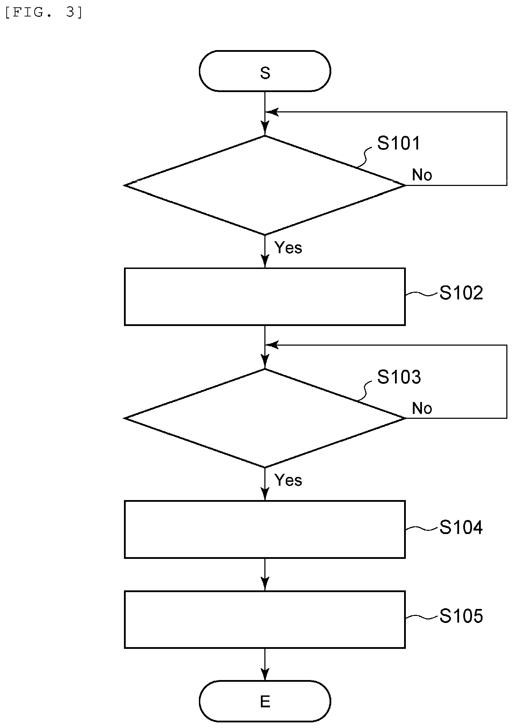

With reference to a flowchart in Fig. 3, attaching processing and detaching processing of an accessory to a vehicle will be described.

Fig. 3 is a flowchart of attaching processing based on an attaching demand of an accessory to a vehicle by the mobile terminal 20. When an authentication demand of the mobile terminal 20 is made with respect to the communication control unit 30 through Near Field Communication, the non-contact communication unit 21 establishes non-contact communication through the communication with the receiver 31, and the authentication unit 32 performs authentication processing of authenticating whether the mobile terminal 20 is the mobile terminal 20 corresponding to the vehicle (Step S101).

Thereafter, if it is checked that the authentication processing is completed, and the user authentication is normally completed (Step S1, Yes), the mobile terminal 20 demands an input for attaching an accessory to a vehicle via the interface 22 of a user. When the message generating unit 23 generates a message in response to the input by the user, the message is transmitted to the communication control unit 30 via the non-contact communication unit 21. If the user authentication is not normally completed (Step S101, No), the authentication processing is repeated a predetermined number of times, and the authentication processing is then ended.

When the receiver 31 receives the message transmitted from the mobile terminal 20, the processing unit 33 generates a command to be processed in the actuator control unit 40, in accordance with the authentication result by the authentication unit 32 and the message that is received by the receiver 31 (Step S102).

If the processing by the processing unit 33 is completed at Step S102, the transmission IC 34 starts transmission of radio waves for establishing the wireless communication with the actuator control unit 40.

Thereafter, if the transmission IC 34 detects that the reception IC 41 of the actuator control unit 40 is present within a predetermined distance range (Step S103, Yes), the transmission IC 34 establishes the wireless communication between the communication control unit 30 and the actuator control unit 40. If the transmission IC 34 does not detect that the reception IC 41 of the actuator control unit 40 is present within a predetermined distance range (Step S3, No), the transmission IC 34 repeats the detection for a predetermined time, and ends the processing if not detecting.

If the wireless communication is established at Step S103, the power transmitting unit 35 performs power transmission to the power receiving unit 42 of the actuator control unit 40 (Step S104).

The power supply managing unit 43 converts the alternating-current power received by the power receiving unit 42 into direct-current power, and converts the voltage of the converted direct-current power into a desired voltage.

Further, the executing unit 44 supplies the power for activating the actuator to the actuator based on the command received by the reception IC 41 (Step S105). In this process, in a case where a state of the actuator that is detected by the detection unit, which is not illustrated, indicates a detached state (in other words, a state where the accessory can be detached from the vehicle) and an instruction by the command demands attaching, the executing unit 44 executes the activation of the actuator so as to perform an operation of attaching the accessory to the vehicle, based on the command.

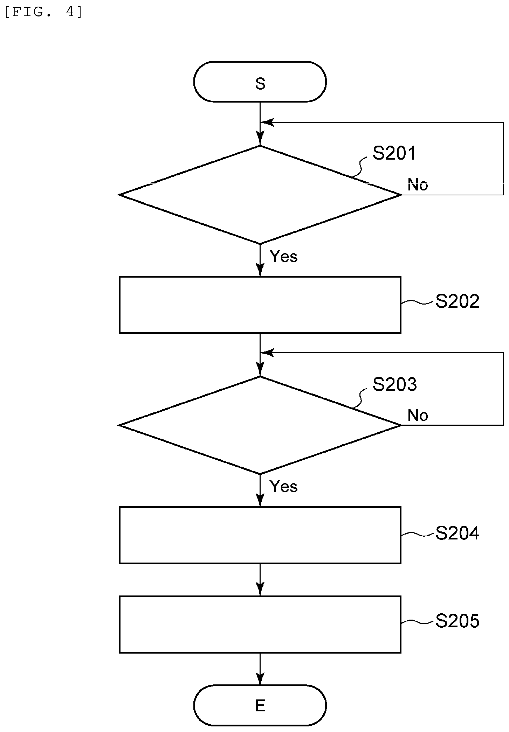

With reference to a flowchart in Fig. 4, opening and closing processing of a lid of a storage box that is attached to a vehicle according to a second embodiment will be described.

Fig. 4 is a flowchart of lid opening processing based on a demand for opening the lid of the storage box by the mobile terminal 20. When an authentication demand of the mobile terminal 20 is made with respect to the communication control unit 30 through Near Field Communication, the non-contact communication unit 21 establishes non-contact communication through the communication with the receiver 31, and the authentication unit 32 performs authentication processing of authenticating whether the mobile terminal 20 is the mobile terminal 20 corresponding to the vehicle (Step S201).

Thereafter, if it is checked that the authentication processing is completed, and the user authentication is normally completed (Step S201, Yes), the mobile terminal 20 demands an input for opening the lid of the storage box via the interface 22 of a user. When the message generating unit 23 generates a message in response to the input by the user, the message is transmitted to the communication control unit 30 via the non-contact communication unit 21. If the user authentication is not normally completed (Step S201, No), the authentication processing is repeated a predetermined number of times, and the authentication processing is then ended.

When the receiver 31 receives the message transmitted from the mobile terminal 20, the processing unit 33 generates a command to be processed in the actuator control unit 40, in accordance with the authentication result by the authentication unit 32 and the message that is received by the receiver 31 (Step S202).

If the processing by the processing unit 33 is completed at Step S202, the transmission IC 34 starts transmission of radio waves for establishing the wireless communication with the actuator control unit 40.

Thereafter, if the transmission IC 34 detects that the reception IC 41 of the actuator control unit 40 is present within a predetermined distance range (Step S203, Yes), the transmission IC 34 establishes the wireless communication between the communication control unit 30 and the actuator control unit 40. If the transmission IC 34 does not detect that the reception IC 41 of the actuator control unit 40 is present within a predetermined distance range (Step S203, No), the transmission IC 34 repeats the detection for a predetermined time, and ends the processing if not detecting.

If the wireless communication is established at Step S203, the power transmitting unit 35 performs power transmission to the power receiving unit 42 of the actuator control unit 40 (Step S204).

The power supply managing unit 43 converts the alternating-current power received by the power receiving unit 42 into direct-current power, and converts the voltage of the converted direct-current power into a desired voltage.

Further, the executing unit 44 supplies the power for activating the actuator to the actuator based on the command received by the reception IC 41 (Step S205). In this process, in a case where a state of the actuator that is detected by the detection unit, which is not illustrated, indicates a lid close state (in other words, a state where the lid is closed) and an instruction by the command demands for lid open, the executing unit 44 executes the activation of the actuator so as to perform an operation of opening the lid of the storage box, based on the command.

### Industrial Applicability

The actuator activation system for an on-vehicle accessory according to the invention can be widely applied to vehicles, specially two-wheeled motor vehicles. Reference Signs List

- 10:: Vehicle
- 20:: Mobile terminal
- 21:: Non-contact communication unit
- 22:: Interface
- 23:: Message generating unit
- 30:: Communication control unit
- 31:: Receiver
- 32:: Authentication unit
- 33:: Processing unit
- 35:: Power transmitting unit
- 40:: Actuator control unit
- 42:: Power receiving unit
- 43:: Power supply managing unit
- 44:: Executing unit
- 50:: Battery
- 200:: Accessory

## Claims

1. An actuator activation system for an on-vehicle accessory comprising:
an authentication unit (32) that performs user authentication of a user of a mobile terminal (20);
a command processing unit (33) that processes a command for activating an actuator that attaches and detaches an accessory (200) to be mounted to a vehicle (10) to and from the vehicle, in response to an input by the user;
a transmission IC (34) that performs wireless communication with a reception IC (41) to be mounted to the accessory, based on the command;
a power transmitting unit (35) that performs power transmission to a power receiving unit (42) to be mounted to the accessory, when the wireless communication is established; and
an executing unit (44) that executes activation of the actuator by using the power that is received by the power receiving unit (42).

2. An actuator activation system for an on-vehicle accessory comprising:
an authentication unit (32) that performs user authentication of a user of a mobile terminal (20);
a command processing unit (33) that processes a command for activating an actuator that opens and closes a lid of a storage box serving as an accessory (200) to be mounted to a vehicle (10), in response to an input by the user;
a transmission IC (34) that performs wireless communication with a reception IC (41) to be mounted to the storage box, based on the command;
a power transmitting unit (35) that performs power transmission to a power receiving unit (42) to be mounted to the storage box, when the wireless communication is established; and
an executing unit (44) that executes activation of the actuator by using the power that is received by the power receiving unit (42).

3. The actuator activation system for an on-vehicle accessory according to claim 1 or 2, wherein the power transmitting unit (35) performs the power transmission, when the reception IC (41) to be mounted to the accessory (200) is present within a predetermined distance range from the transmission IC (34).

4. The actuator activation system for an on-vehicle accessory according to claim 1 or 2, wherein when the user authentication is made, the mobile terminal (20) starts up an interface (21) that receives an input by the user.

5. The actuator activation system for an on-vehicle accessory according to claim 1 or 2, wherein the transmission IC is provided in a rear portion of the vehicle.

6. The actuator activation system for an on-vehicle accessory according to claim 1, wherein the accessory (200) is a pannier case.

7. The actuator activation system for an on-vehicle accessory according to claim 1, wherein the accessory (200) is a top case.

8. The actuator activation system for an on-vehicle accessory according to claim 1 or 2, wherein the vehicle (10) is a saddle-type vehicle.

9. An actuator activation method for an on-vehicle accessory comprising:
an authentication step (S101) of performing user authentication of a user of a mobile terminal (20);
a process step (S102) of processing a command for activating an actuator that attaches and detaches an accessory (200) to be mounted to a vehicle (10) to and from the vehicle, in response to an input by the user;
a communication step (S103) of performing wireless communication with a reception IC (41) to be mounted to the accessory, based on the command;
a power transmission step (S104) of transmitting power to a power receiving unit (42) to be mounted to the accessory, when the wireless communication is established; and
an execution step (S105) of executing activation of the actuator by using the power that is received by the power receiving unit (42).

10. An actuator activation method for an on-vehicle accessory comprising:
an authentication step (S101) of performing user authentication of a user of a mobile terminal (20);
a process step of processing a command for activating an actuator that opens and closes a lid of a storage box serving as an accessory (200) to be mounted to a vehicle (10), in response to an input by the user;
a communication step of performing wireless communication with a reception IC (41) to be mounted to the storage box, based on the command;
a power transmission step of performing power transmission to a power receiving unit (42) to be mounted to the storage box, when the wireless communication is established; and
an execution step of executing activation of the actuator by using the power that is received by the power receiving unit (42).
